# EUROPÄISCHE PATENTSCHRIFT

(11) **EP 3 251 513 B1**
(45) Veröffentlichungstag und Bekanntmachung des Hinweises auf die Patenterteilung: **12.02.2020**
(21) Anmeldenummer: 17171298.7
(22) Anmeldetag: 16.05.2017
(51) Int. Cl.: A21B 3/13

(54) **BACKFORM UND VERFAHREN ZUR HERSTELLUNG VON BACKWAREN**
BAKING MOULD AND METHOD FOR THE PREPARATION OF BAKED GOODS
MOULE DE CUISSON ET PROCÉDÉ DE FABRICATION DE PRODUITS CUITS

(30) Priorität: 01.06.2016 DE 102016209593
(43) Veröffentlichungstag der Anmeldung: 06.12.2017
(73) Patentinhaber: Kuchenmeister GmbH, 59494 Soest (DE)
(72) Erfinder: TROCKELS, Uwe, 10777 Berlin (DE); JANK, Rüdiger, 16548 Glienicke (DE)
(74) Vertreter: Maikowski & Ninnemann Patentanwälte Partnerschaft mbB

(56) Entgegenhaltungen:
- WO-A1-01/06858
- WO-A1-2007/063338
- CH-A- 33 093
- DE-A1- 2 643 788
- GB-A- 2 001 346
- GB-A- 2 193 626
- US-A- 1 836 306
- US-A- 1 971 903
- US-A- 5 232 609

## Beschreibung

Die vorliegende Erfindung betrifft eine Backform zum Backen einer Backmasse gemäß der Präambel des Anspruchs 1, und ein Verfahren zum Backen einer Backmasse gemäß Anspruch 7.

### Beschreibung

Backwaren, wie Kuchen aus Rührkuchenmassen, Hefeteigen oder anderen proteinreichen, backfähigen Massen, werden üblicherweise in einer Backform gebacken. Derartige Kuchen können unterschiedliche Gewichte in einem Bereich zwischen 50 g und 1000 g, bevorzugt 100 g und 400 g aufweisen.

Die zum Backen der fließfähigen Backmassen und Backteige verwendeten Backformen können unterschiedliche Formen, wie zum Beispiel eine rechteckige oder ringförmige Form, aufweisen. Durch eine geeignete Profilierung der Backform können die Backwaren mit unterschiedlich geformten Oberflächen versehen werden.

So ist aus der US 5,23 2,609 eine Backform zum Backen einer Backmasse mit einer Bodenfläche, einer oberen Öffnung und vier Seitenwänden bekannt, wobei die Bodenfläche perforiert sein kann. Auf der Bodenfläche der Backform kann eine vorgeformte Membran oder Formteil vorgesehen sein, wobei das Formteil entfernbar ist und verschiedene Formen aufweisen kann. Aus der GB 2193626A ist eine Backform umfassend eine erste planare Lage und eine zweite Lage bekannt, die aus demselben Material wie die Lage ist, aber voneinander separierte Vertiefungen zum Backen z.B. von Brötchen aufweist. Aus der CH 33093 ist eine Backform bekannt, die durch Hohlrippen in Fächer unterteilt ist. WO 2007/063338 A1 beschreibt eine Backware / Süßigkeit umfassend mindestens eine Vertiefung. Aus der WO 01/06858 A1 ist ein backfertiger Teig bekannt, der im Kühlschrank aufbewahrt werden kann und in voneinander abtrennbaren bzw. abbrechbaren Portionen vorliegt.

Gemeinsam ist diesen Formen allerdings, dass die darin hergestellten Backwaren entweder in einer einheitlichen Größe (bestimmt durch die verwendete Backform) vorliegen und vor dem Verzehr zunächst in geeignete Portionsgrößen geschnitten werden müssen, oder vollständig voneinander separariert sind (siehe GB 2193626A).

Entsprechend wäre es wünschenswert, eine Backform zu entwickeln, die die Bereitstellung von Backwaren in kleineren, leicht zugänglichen Portionsgrößen ermöglicht.

Die Aufgabe der vorliegenden Erfindung ist demnach die Bereitstellung einer Backform für Backwaren, wobei die fertigen Backwaren vor dem Verzehr nicht in die gewünschten Portionsgrößen zugeschnitten werden müssen, sondern vielmehr dem Verbraucher den Zugang zu kleinen Portionsgrößen ohne die Notwendigkeit des Zuschneidens in einfacher Weise ermöglicht.

Diese Aufgabe wird mit einer Backform mit den Merkmalen des Anspruchs 1 und einem Verfahren zum Backen unter Verwendung dieser Backform mit den Merkmalen des Anspruchs 7 gelöst.

Entsprechend wird eine Backform zum Backen einer backfähigen Teigmasse bzw. eine Backmasse, insbesondere einer Kuchenmasse, einer Hefemasse oder anderer proteinreicher Massen, bereitgestellt.

Die vorliegende Backform umfasst mindestens eine Bodenfläche und mindestens eine obere Öffnung, wobei Bodenfläche und obere Öffnung sich gegenüberliegen und der Abstand zwischen Bodenfläche und oberer Öffnung der Höhe h_{B} der Backform entspricht. Die Backform umfasst des Weiteren mindestens eine kreisrunde Seitenwand, mindestens eine elliptische Seitenwand oder mindestens vier Seitenwände a, b, c, d, die sich jeweils, bevorzugt senkrecht oder konisch, von der Bodenfläche und der oberen Öffnung erstrecken und diese miteinander verbinden.

Entsprechend weist die vorliegende Backform eine kreisrunde, elliptische oder rechteckige, bevorzugt quadratische Geometrie auf.

Die vorliegende Backform umfasst ebenfalls mindestens eine sich (innerhalb der Backform) von der Bodenfläche in Richtung der oberen Öffnung erstreckende durchgehende stegförmige Erhebung mit der Höhe h_{E}, die entlang der Bodenfläche verläuft und die Bodenfläche in mindestens zwei Segmente unterteilt, wobei die die Höhe h_{E} der mindestens einen stegförmigen Erhebung zwischen 1/3 bis 4/5, bevorzugt 1/3 bis 2/3 der Gesamthöhe h_{B} der Backform beträgt.

Erfindungsgemäß ist die mindestens eine stegförmige Erhebung einstückig mit der Backform ausgebildet.

Des Weiteren ist die mindestens eine stegförmige Erhebung zur Erhöhung der Wärmeübertragung geschwärzt und die Bodenfläche und die Seitenwände sind nicht geschwärzt, so dassdie mindestens eine stegförmige Erhebung eine erhöhte Wärmeübertragung als die Bodenfläche und/oder Seitenwände der Backform aufweist.

In einer besonders bevorzugten Ausführungsform weist die vorliegende Backform eine rechteckige oder quadratische Geometrie auf, wobei im Falle der rechteckigen Geometrie die Länge der Seitenwände a, b kleiner oder gleich der Länge der Seitenwände c, d ist, d.h. die zwei parallel zueinander verlaufenden (d.h. sich gegenüberliegende) Seitenwände a, b und c, d weisen jeweils die gleiche Länge (d.h. La = Lb und Lc=Ld) auf. Die mindestens eine stegförmige Erhebung verläuft in diesem Fall entlang der Bodenfläche und parallel zu mindestens einer der vier Seitenwände und unterteilt die Bodenfläche in mindestens zwei Segmente.

Im Falle einer kreisrunden (kreisförmigen) oder elliptischen Geometrie der vorliegenden Backform ist die mindestens eine stegförmige Erhebung derart auf der Bodenfläche vorgesehen, so dass der Kreis bzw. die Ellipse in jeweils zwei symmetrisch zueinander angeordnete Hälften unterteilt wird. Es werden entsprechend zwei halbkreisförmige Segmente bzw. zwei halbellipsenförmige Segmente gebildet.

Die sich von der Bodenfläche der Backform in Richtung der oberen Öffnung der Backform erstreckende stegförmige Erhebung kann auch als ein Vorsprung oder eine Zwischenwand bezeichnet werden. Die Erhebung bzw. der Vorsprung bildet dabei eine innere Wand eines gebildeten Segmentes; die äußeren Segmentwände werden jeweils durch die (korrespondierenden) Seitenwände der Backform gebildet.

Die Segmentierung der vorliegenden Backform durch die mindestens eine oder mehrere stegförmige Erhebung(en) ermöglicht das gleichzeitige Backen von mindestens zwei, bevorzugt 4 bis 6, Teigportionen in den in der Backform ausgebildeten Segmenten.

Auch wird mit der vorliegenden Backform eine tiefenprofilierte Backform bereitgestellt, die eine differenzierte Intensität der Wärmeenergieübertragung und innerhalb der Backform unterschiedliche Wärmeübertragungsarten ermöglicht. Die inhomogene Wärmeübertragung und Wasserdampfmigration führt wiederum zu einer differenzierten Textur innerhalb der Gebäckstruktur. Dadurch wird eine Teilung der Backware ohne Gebrauch von Schneidwerkzeugen ermöglicht. Die inhomogene Backwarenstruktur zeichnet sich durch eine unterschiedliche Härte, Elastizität und Produktfeuchte aus. So ist die Gebäckstruktur an den Produktfugen (gebildet aufgrund der stegförmigen Erhebung in der Backform) etwas fester und weniger elastisch und kann durch geringe Krafteinwirkung gebrochen werden. Diese profilierten Sollbruchstellen geben dem Verbraucher die möglichen Portionsgrößen vor.

Wie oben angemerkt, beträgt erfindungsgemäß die Höhe h_{E} der mindestens einen stegförmigen Erhebung zwischen 1/3 bis 4/5, bevorzugt 1/3 bis 2/3 der Gesamthöhe h_{B} der Backform. Entsprechend beträgt die Höhe der Produktfuge bzw. der Sollbruchstelle in der Backware ebenfalls zwischen 1/3 bis 4/5, bevorzugt bis 2/3 der Gesamthöhe des Kuchens. Die Höhe der Produktfuge in der Backware kann demnach variabel eingestellt werden. Die gegenüber den Seitenwänden der Backform reduzierte Höhe der stegförmigen Erhebung bewirkt das die gebildeten Segmente ebenfalls niedriger sind als die Seitenwände, so dass eine Teilung der fertigen Backware bereits nach dem Entleeren der Backform vermieden wird; die Teilung der Backware in geeignete Portionsgrößen soll erst bewusst durch den Verbraucher z.B. durch Abbrechen an den gebildeten Sollbruchstellen erfolgen.

Wie oben erwähnt, ist in der vorliegenden Backformdie mindestens eine stegförmige Erhebung bzw. der Vorsprung einstückig mit der Backform ausgebildet. Entsprechend bestehen Erhebung und Backform bevorzugt aus dem gleichen Material. Als bevorzugtes Material wird für die vorliegende Backform Stahlblech oder Aluminium verwendet.

In einer bevorzugten Variante der vorliegenden Backform besteht die mindestens eine stegförmige Erhebung aus zwei sich gegenüberliegenden Wänden und einer die zwei Wände an deren oberen Ende verbindenden Fläche. Demnach ist zwischen den zwei Wänden der stegförmigen Erhebung bevorzugt ein Spalt ausgebildet, der eine freie Zirkulation der Backwärme zwischen den Segmenten ermöglicht. Die Breite des Spaltes entspricht dem Abstand der zwei sich gegenüberliegenden Wände der Erhebung und somit der Dicke der mindestens einen stegförmigen Erhebung.

Bei Betrachtung der Unterseite der Backform, d.h. der Unterseite der Bodenfläche der Backform, sind die in das Innere der Backform gerichteten Erhebungen bzw. Vorsprünge als Vertiefungen oder Eindrücke ausgebildet.

Wie oben bereits ebenfalls angemerkt, weist die mindestens eine stegförmige Erhebung eine erhöhte Wärmeübertragung als die Bodenfläche und/oder Seitenwände der Backform auf. Hierzu ist es wünschenswert, dass die mindestens eine stegförmige Erhebung geschwärzt ist, und die Bodenfläche und die Seitenwände nicht geschwärzt, zum Beispiel silbrig, vorliegen. Dies ermöglicht unterschiedliche Wärmeübertragungsarten. So reflektieren die ungeschwärzten Segmente bzw. Abschnitte der Backform die Wärme intensiver als die geschwärzten Erhebungen bzw. Zwischenräume der Backform. Dadurch wird die Intensität der Wärmeübertragung im geschwärzten Bereich der Backform erhöht.

In einer bevorzugten Ausführungsform weist die vorliegende Backform eine stegförmige Erhebung auf, die die Backform in zwei Segmente unterteilt.

Im Falle einer rechteckigen Geometrie der Backform kann die eine einzelne Erhebung bzw. der eine einzelne Vorsprunges entweder parallel zu den Seitenwänden a,b oder c,d verlaufen. In beiden Fällen wird die Backform in zwei Segmente unterteilt. Die Segmentgröße kann variabel durch den Abstand der Erhebung bzw. des Vorsprunges von den Seitenwänden eingestellt werden. Bevorzugt ist der Abstand der Erhebung bzw. des Vorsprunges zu den Seitenwänden gleich groß, so dass zwei Segmente von gleicher Größe ausgebildet werden. Die eine Erhebung verläuft in diesem Fall bevorzugt entlang der Mitte der Backform und trifft auf die Seitenwände an der Hälfte der Länge der Seitenwände der Backform.

In einer weiteren bevorzugten Ausführungsform weist die vorliegende rechteckige Backform zwei parallel zueinander verlaufende stegförmige Erhebungen auf, die die Backform in drei Segmente unterteilt. In dieser Variante können die zwei Erhebungen parallel zueinander verlaufen, so dass drei Segmente, bevorzugt längliche oder rechteckige Segmente mit unterschiedlichen Seitenlängen, gebildet werden. Das Volumen der Segmente kann durch den Abstand der Erhebungen von den Seitenwänden der Backform und des Abstandes der Erhebungen zueinander eingestellt werden. Bevorzugt ist der Abstand so gewählt, dass die Segmente gleiche Volumina aufweisen.

In einer anderen bevorzugten Ausführungsform weist die vorliegende rechteckige Backform zwei stegförmige Erhebungen auf, die in einem rechten Winkel zueinander angeordnet sind, so dass die Backform in vier Segmente unterteilt wird. In dieser bevorzugten Variante sind die zwei Vorsprünge bzw. Erhebungen in einem rechten Winkel zueinander angeordnet, so das sich die Erhebungen schneiden. In diesem Fall verläuft ein Vorsprung bzw. eine Erhebung parallel zu den Seitenwänden a, b der Backform und die andere Erhebung verläuft parallel zu den Seitenwänden c, d der Backform. Die zwei Vorsprünge oder Erhebungen können jeweils in jedem beliebigen Abstand von den parallel laufenden Seitenwänden der Backform vorgesehen sein und sich kreuzen. Bevorzugt sind die mindestens zwei Vorsprünge so zueinander angeordnet, dass die mindestens 4 (jeweils quadratisch mit gleichen Seitenlängen) gebildeten Segmente von gleicher Größe sind; d.h. die gebildeten Segmente weisen die gleiche Grundfläche und das gleiche Volumen auf.

In einer noch weitergehenden Ausführungsform der vorliegenden rechteckigen Backform weist die Backform drei parallel zueinander verlaufende stegförmige Erhebungen auf, wobei die Backform in vier Segmente unterteilt wird. In diesem Falle können die drei Erhebungen jeweils parallel zueinander verlaufen und entsprechend vier längliche Segmente ausbilden, deren Volumen durch den Abstand der Erhebungen zu den Seitenwänden und zueinander variierbar ist. Bevorzugt wird der Abstand der Erhebungen jedoch so eingestellt, dass alle vier Segmente die gleichen Volumina aufweisen.

In einer besonders bevorzugten Ausführungsform der vorliegenden rechteckigen Backform weist die Backform zwei parallel zueinander verlaufende stegförmige Erhebungen und eine zu diesen zwei Erhebungen senkrecht angeordnete dritte stegförmige Erhebung auf, wobei die Backform in sechs Segmente unterteilt wird. In diesem Falle verlaufen zwei Erhebungen parallel zu den Seitenwänden (bevorzugt kürzeren) a, b und eine dritte Erhebung verläuft parallel zu den (bevorzugt längeren) Seitenwänden c, d. Es werden sechs Segmente gebildet, wobei die Volumina der Segmente bevorzugt jeweils gleich sind.

Das Verfahren zum Backen einer backfähigen Backmasse bzw. Teigmasse in mindestens einer Backform gemäß der vorliegenden Erfindung umfasst die folgenden Schritte:
- Bereitstellen von mindestens einer Backmasse; insbesondere einer Kuchenmasse wie z.B. Rührmasse, Sandmasse, Quarkmasse, Baumkuchenmasse, eines flüssigen oder viskosen Hefeteiges oder anderer proteinreicher Massen;
- Einfüllen der mindestens einen Backmasse in die mindestens eine Backform und optionales Verschließen der mindestens einen Backform, und
- Backen der mindestens einen Backmasse in der mindestens einen Backform in mindestens einem Backofen bei Temperaturen zwischen 100°C und 300°C, bevorzugt zwischen 140°C und 280 °C, insbesondere bevorzugt zwischen 160°C und 240 °C.

Während des Backvorganges kann die Backform auf einem Band durch den Backofen geführt werden, wobei es hier zu einer Wärmeleitung über die Bodenfläche der Backform, insbesondere die Bodenfläche der Segmente bzw. Noppen der Backform aufgrund der Berührung der selbigen mit dem Band kommt.

Es ist aber auch denkbar, dass die Backform während des Backvorganges keine Bodenberührung hat. In diesem Falle sind die Backformen bevorzugt in einem Rahmen aufgehängt und die Wärmeübertragung erfolgt im Backofen durch Strahlung und/oder Konvektion.

In einer Ausführungsform des vorliegenden Verfahrens werden mindestens zwei Backmassen mit unterschiedlicher Zusammensetzung bereitgestellt, wobei mindestens eine erste Backmasse B1 die Dichte pB1 und mindestens eine zweite Backmasse B2 die Dichte pB2 aufweist und pB1 ≥ pB2 ist.

Die mindestens eine erste Backmasse B1 wird in einer Menge in die mindestens eine Backform eingefüllt, so dass zumindest die durch die mindestens eine stegförmige Erhebung ausgebildeten Segmente bzw. Profile der Backform mit der Backmasse B1 vollständig ausgefüllt sind.

Anschließend wird die mindestens eine zweite Backmasse B2 mit einer Menge in die mindestens eine Backform eingefüllt, so dass die mindestens eine erste Backmasse B1 vollständig abgedeckt ist. Insbesondere deckt die Bachmasse B2 mit der geringeren Dichte das gesamte nicht mit der ersten Backmasse befüllte Volumen der Backform ab, d.h. das Volumen der Backform oberhalb der Segmente und bildet somit auch die Sollbruchstellen zwischen den Segmenten der Backware aus.

Die mindestens eine erste Backmasse kann auch als Profilmasse bezeichnet werden, die aufgrund der Rohstoffauswahl über eine weichere Gebäckstruktur verfügt. Die Profilmasse verfügt z.B. über einen höheren Anteil an Vollei. Durch die Verwendung von Hydrokolloiden und Cellulosederivaten wird die Weichheit der Backtextur unterstützt. Die Zugabe von Glycerol und Sorbitol erhöht die Produktfeuchte der Backmasse und verringert gleichzeitig das Desorptionsverhalten der Feuchte.

So kann eine typische Rezeptur der vorliegend verwendeten ersten Backmasse folgende Inhaltsstoffe (jeweils in Gew%) enthalten: Weizenmehl (15-30%, bevorzugt 18-25%), Weizenstärke (5-15%, bevorzugt 5-10%), Vollei (20-30%, bevorzugt 25%) Zucker (15 - 25%, bevorzugt 22%), Aromen (0,5%), pflanzliche Fette (20-30%, bevorzugt 25%) und andere Zutaten. Auch können der Backmasse Zusätze zur Erhöhung der Schaumstabilität zugegeben werden, wie z.B. Hydrokolloide, Xanthan, Emulgatoren oder auch Quellstärke. Unter Quellstärke ist dabei eine thermisch behandelte, weitgehend aufgeschlossene Stärke zu verstehen. Im Unterschied zur nativen Stärke zeigt sie ein verändertes Lösungsverhalten, wobei sie bereits bei Vermischung mit kaltem Wasser aufquillt.

Die mindestens eine zweite Backmasse kann auch als abdeckende Masse bezeichnet werden, die aufgrund ihrer zu der der ersten Backmasse abweichenden Zusammensetzung eine höhere Brüchigkeit aufweist. Der Texturunterschied wird z.B. durch einen höheren Anteil an Trockenstoffen, wie Weizenmehl, Zuckerstoffe und Fett erreicht.

Aufgrund der spezifischen Dichte der ersten und zweiten Backmasse wird eine Vermischung bzw. ein Diffundieren der zweiten (abdeckenden) Backmasse in die erste (unterhalb der zweiten Backmasse vorgesehene) Backmasse verhindert.

Im Anschluss an den Backschritt kann die gebackene Backware mit mindestens einer Glasur und/oder Kuvertüre überzogen werden. Dies führt zu einer zusätzlichen Erhöhung der mechanischen Empfindlichkeit an den Sollbruchstellen, da die Stärke des Überzuges nach dem Aushärten des Überzuges an den Profilfugen höher ist als an der Oberfläche der Backware.

Mit dem vorliegenden Backverfahren wird eine Backware hergestellt, die mindestens eine Vertiefung umfasst, die spiegelsymmetrisch zu der mindestens einen stegförmigen Erhebung in der Backform ist. Die Vertiefung kann auch als Produktfuge oder als profilierte Sollbruchstelle zur Vorgabe für Portionsgrößen beschrieben werden.

Die mit dem vorliegenden Verfahren hergestellte Backware umfasst bevorzugt mindestens zwei Abschnitte (Portionsgrößen), die zu den mindestens zwei Segmenten der Backform korrespondieren. Mit anderen Worten: die Segmentgrößen bzw. Segmentvolumina, die durch die mindestens eine stegförmige Erhöhung in der Backform vorgegeben werden, korrespondieren zu den Portionsgrößen der fertigen Backwaren.

Die vorliegende Backware umfasst mindestens eine erste gebackene Masse (gebildet aus der ersten Backmasse B1) und mindestens eine zweite gebackene Masse (gebildet aus der zweiten Backmasse B2) mit unterschiedlicher Zusammensetzung, wobei die mindestens eine erste gebackene Masse B1 und die mindestens eine zweite gebackene Masse B2 nicht miteinander vermischt sind.

In einer Variante der vorliegenden Backware ist die zweite gebackene Masse B2 trockener und weist eine höhere Gebäckhärte als die erste gebackene Masse B1 auf.

Auch ist es möglich, dass die Backware mindestens einen Überzug aus Glasur und/oder Kuvertüre aufweist.

Die vorliegende Erfindung wird nachfolgend im Detail an einem Ausführungsbeispiel unter Bezugnahme auf die Figuren der Zeichnung näher erläutert. Es zeigen:
- Figur 1A: eine Draufsicht auf eine erste Ausführungsform der vorliegenden Backform,
- Figur 1B: eine Ansicht der Unterseite der in Figur 1A gezeigten Ausführungsform der vorliegenden Backform, und
- Figur 2: eine Draufsicht auf eine zweite Ausführungsform der vorliegenden Backform.

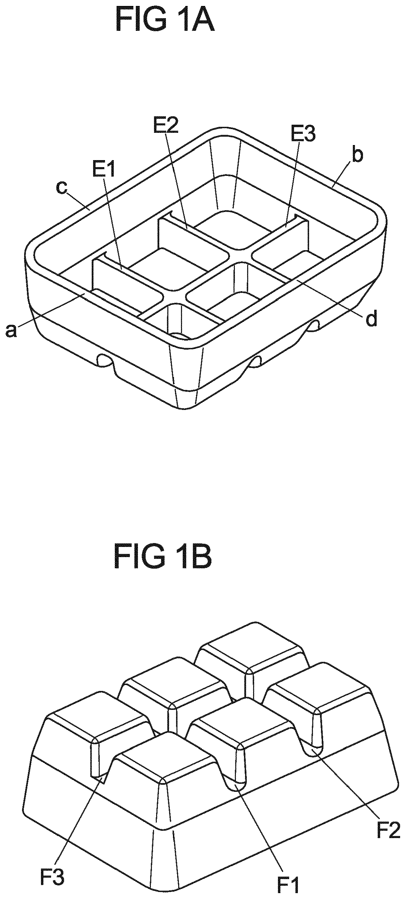

Figur 1A zeigt eine Draufsicht auf eine erste Ausführungsform der vorliegenden Backform. In dieser Ausführungsform ist eine rechteckige Backform mit den Seitenwänden a, b, c, d dargestellt, wobei die Länge der Seitenwände a, b kleiner ist als die Länge der Seitenwände c, d.

Die Backform der Figur 1A weist insgesamt drei stegförmige Erhöhungen auf, wobei zwei Erhebungen E1, E2 parallel zu den Seitenwänden a, b verlaufen und die dritte Erhebung E3 parallel zu den Seitenwänden c, d verläuft. Entsprechend schneidet die dritte Erhebung E3 die Erhebungen E1 und E2 in einem rechten Winkel. Der Abstand der drei Erhebungen von den Seitenwänden ist jeweils so gewählt, dass 6 Segmente mit gleichen Volumina ausgebildet werden. Die Höhe der Erhebungen beträgt in der Ausführungsform der Figur 1A ca. die Hälfte der Gesamthöhe der Backform. Entsprechend wird die Höhe der Produktfugen der in der Backform hergestellten Backware ungefähr der Hälfte der Backwarenhöhe entsprechen oder kann auch in Abhängigkeit der Menge der abdeckenden Backmasse eine geringere Höhe aufweisen.

Aus der in Figur 1B gezeigten Ansicht der Unterseite der in Figur 1A gezeigten Ausführungsform der Backform ist die Segmentierung der Bodenfläche der Backform durch die stegförmigen Erhebungen in 6 Segmente ersichtlich. Die stegförmigen Erhöhungen E1, E2, E3 sind in dieser Ansicht als Vertiefungen F1, F2, F3 in der Boden Fläche der Backform erkennbar. Die zu den stegförmigen Erhöhungen korrespondierenden Vertiefungen F1, F2, F3 sind jeweils durch zwei Seitenwände gekennzeichnet, deren Abstand voneinander die Spaltbreite der Vertiefungen und damit die Dicke der stegförmigen Erhöhung bestimmt.

Die ausgebildeten Segmente bzw. Nocken weisen im Falle der in Figur 1B gezeigten Ausführungsform eine silbrige Farbe auf, während die Vertiefungen bzw. Zwischenräume der Backform geschwärzt vorliegen. Entsprechend reflektieren die Segmente bzw. Nocken die Wärme intensiver als die geschwärzten Vertiefungen bzw. Zwischenräume der Backform. Dadurch wird die Intensität der Wärmeübertragung im geschwärzten Bereich der Backform erhöht. Die differenzierte Wärmeübertragung und Wärmeintensität in den Segmenten und den Vertiefungen der Backform bedingt eine inhomogene Gebäckstruktur. Hierbei weist die an den stegförmigen Erhöhungen gebildete Gebäckstruktur (d.h. an den Produktfugen) eine festere und weniger elastische Struktur auf, die durch eine geringe Krafteinwirkung leichter gebrochen werden kann. Diese profilierten soll Bruchstellen geben dem Verbraucher die möglichen Portionsgrößen vor.

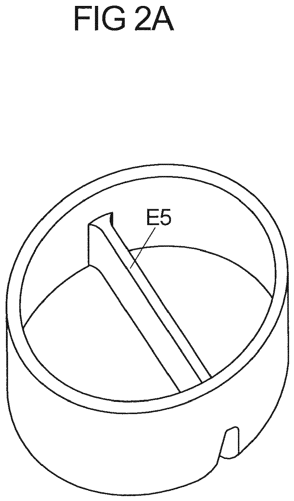

Die in Figur 2 gezeigte weitere Ausführungsform der vorliegenden Backform weist eine kreisrunde Bodenfläche mit einem vorbestimmten Durchmesser d bzw. Radius r auf. Die kreisrunde Bodenfläche wird durch die stegförmige Erhebung E5 in zwei spiegelsymmetrische halbkreisförmige Segmente unterteilt. Die Länge der stegförmigen Erhebung E5 entspricht dabei dem Durchmesser d der Bodenfläche.

### Ausführungsbeispiel:

Das Befüllen der gebildeten Segmente bzw. Profile der erfindungsgemäßen Backform erfolgt mit zwei Teigmassen mit unterschiedlichen Dichten, wobei die Masse B1 (Profilmasse) eine höhere Dichte und eine höhere Feuchte aufweist als die Masse B2 (abdeckende Masse).

Beispiele für die Zusammensetzung der jeweiligen Massen sind in der folgenden Tabelle angeführt.

| **Rohstoff** | **Masse B1 (Profilmasse) (%)** | **Masse B2 (%)** |
|---|---|---|
| Weizenmehl | 18,0 | 22,0 |
| Vollei | 20,0 | 17,0 |
| Pflanzenfett | 20,0 | 22,0 |
| Saccharose | 22,0 | 24,0 |
| Sorbitol | 6.0 | 4,0 |
| Glycerol | 3,0 | 2,0 |
| Mono- Diglyceride | 0,5 | 0,5 |
| Aroma | 0,5 | 0,5 |
| Wasser | 6,0 | 4,5 |
| Quellstärke | 1,5 | 1,0 |
| Kochsalz | 0,5 | 0,5 |
| Hydroxypropylmethylcellulose | 2,0 | |
| Polyglycerinester | | 1,0 |
| Xanthan | | 1,0 |
| Dichte | 0,85 gcm⁻³ | 0,75 gcm⁻³ |
| Partialfeuchte | 20,5% | 19.0% |
| Wasseraktivität | 0,79 | 0,79 |

## Patentansprüche

1. Backform zum Backen einer Backmasse, insbesondere einer Kuchenmasse, einer Hefemasse oder anderer proteinreicher Massen,
- mit mindestens einer Bodenfläche und mindestens einer oberen Öffnung, wobei Bodenfläche und obere Öffnung sich gegenüberliegen und der Abstand zwischen Bodenfläche und oberer Öffnung der Höhe h_{B} der Backform entspricht;
- mit mindestens einer kreisrunden oder elliptischen Seitenwand oder vier Seitenwänden a, b, c, d, die sich jeweils von der Bodenfläche und der oberen Öffnung erstrecken und diese miteinander verbinden;
- mit mindestens einer sich von der Bodenfläche in Richtung der oberen Öffnung erstreckenden durchgehenden stegförmigen Erhebung mit der Höhe h_{E}, die entlang der Bodenfläche verläuft und die Bodenfläche in mindestens zwei Segmente unterteilt,
wobei die Höhe h_{E} der mindestens einen stegförmigen Erhebung zwischen 1/3 bis 4/5, bevorzugt 1/3 bis 2/3 der Gesamthöhe h_{B} der Backform beträgt,
**dadurch gekennzeichnet, dass**
die mindestens eine stegförmige Erhebung einstückig mit der Backform ausgebildet ist, und
die mindestens eine stegförmige Erhebung zur Erhöhung der Wärmeübertragung geschwärzt ist und die Bodenfläche und die Seitenwände nicht geschwärzt sind, so dass die mindestens eine stegförmige Erhebung eine erhöhte Wärmeübertragung als die Bodenfläche und/oder Seitenwände der Backform aufweist.

2. Backform nach einem der vorhergehenden Ansprüche, **gekennzeichnet durch** eine stegförmige Erhebung, die die Backform in zwei Segmente unterteilt.

3. Backform nach einem der vorhergehenden Ansprüche, **gekennzeichnet durch** zwei parallel zueinander verlaufende stegförmige Erhebungen, die die Backform in drei Segmente unterteilt.

4. Backform nach einem der vorhergehenden Ansprüche, **gekennzeichnet durch** zwei stegförmige Erhebungen, die in einem rechten Winkel zueinander angeordnet sind, so dass die Backform in vier Segmente unterteilt wird.

5. Backform nach einem der vorhergehenden Ansprüche, **gekennzeichnet durch** drei parallel zueinander verlaufende stegförmige Erhebungen, wobei die Backform in vier Segmente unterteilt wird.

6. Backform nach einem der vorhergehenden Ansprüche, **gekennzeichnet durch** zwei parallel zueinander verlaufende stegförmige Erhebungen und eine zu diesen zwei Erhebungen senkrecht angeordnete dritte stegförmige Erhebung, wobei die Backform in sechs Segmente unterteilt wird.

7. Verfahren zum Backen einer Backmasse in mindestens einer Backform nach einem der vorhergehenden Ansprüche umfassend die Schritte:
- Bereitstellen von mindestens einer Backmasse;
- Einfüllen der mindestens einen Backmasse in die mindestens eine Backform und optionales Verschließen der mindestens einen Backform, und
- Backen der mindestens einen Backmasse in der mindestens einen Backform in mindestens einem Backofen bei Temperaturen zwischen 100°C und 300°C, bevorzugt zwischen 140°C und 280 °C, insbesondere bevorzugt bei 160°C und 240°C.

8. Verfahren nach Anspruch 7, **gekennzeichnet durch**
- Bereitstellen von mindestens zwei Backmassen mit unterschiedlicher Zusammensetzung, wobei mindestens eine erste Backmasse B1 die Dichte ρB1 und mindestens eine zweite Backmasse B2 die Dichte ρB2 aufweist und ρB1 ≥ ρB2 ist.
- Einfüllen der mindestens einen ersten Backmasse B1 mit einer Menge in die mindestens eine Backform, so dass zumindest die Segmente der Backform mit der Backmasse B1 vollständig ausgefüllt sind, und
- Einfüllen der mindestens einen zweiten Backmasse B2 mit einer Menge in die mindestens eine Backform, so dass die mindestens eine erste Backmasse B2 vollständig abgedeckt ist.

9. Verfahren nach Anspruch 7 oder 8, **dadurch gekennzeichnet, dass** die gebackene Backware mit mindestens einer Glasur und/oder Kuvertüre überzogen wird.

## Claims

1. Baking pan for baking a baking mass, in particular a cake mass, a yeast mass or other masses rich in protein
- with at least one bottom surface and at least one upper opening, wherein the bottom surface and the upper opening are opposite each other and the distance between the bottom surface and the upper opening corresponds to the height h_{B} of the baking pan;
- with at least one circular or elliptical side wall or four side walls a, b, c, d, each extending from and connecting the bottom surface and the upper opening;
- with at least one continuous bar-shaped elevation of height h_{E} extending from the bottom surface in the direction of the upper opening, which runs along the bottom surface and divides the bottom surface into at least two segments,
wherein the height h_{E} of the at least one bar-shaped elevation is between 1/3 and 4/5, preferably 1/3 to 2/3 of the total height h_{B} of the baking pan,
**characterized in that**
the at least one bar-shaped elevation is formed integrally with the baking pan, and
the at least one bar-shaped elevation is blackened to increase heat transfer and the bottom surface and the side walls are not blackened, so that the at least one bar -shaped elevation has an increased heat transfer than the bottom surface and/or side walls of the baking pan.

2. Baking pan according to one of the preceding claims, **characterized by** a bar-shaped elevation which divides the baking pan into two segments.

3. Baking pan according to one of the preceding claims, **characterized by** two bar-shaped elevations running parallel to one another, which divide the baking pan into three segments.

4. Baking pan according to one of the preceding claims, **characterized by** two bar-shaped elevations arranged at right angles to each other so that the baking pan is divided into four segments.

5. Baking pan according to one of the preceding claims, **characterized by** three bar-shaped elevations running parallel to one another, whereby the baking pan is divided into four segments.

6. Baking pan according to one of the preceding claims, **characterized by** two bar-shaped elevations running parallel to one another and a third bar-shaped elevation arranged perpendicular to these two elevations, wherein the baking pan is divided into six segments.

7. Method for baking a baking mass in at least one baking pan according to one of the preceding claims, comprising the steps:
- providing at least one baking mass;
- filling the at least one baking mass into the at least one baking pan and optionally closing the at least one baking pan, and
- baking of the at least one baking mass in the at least one baking pan in at least one baking oven at temperatures between 100°C and 300°C, preferably between 140°C and 280 °C, especially preferably at 160°C and 240 °C.

8. Method according to claim 7, **characterized by**
- providing at least two baking masses with different compositions, at least one first baking mass B1 having the density ρB1 and at least one second baking mass B2 having the density ρB2 and ρB1 ≥ being ρB2.
- filling the at least one first baking mass B1 with a quantity into the at least one baking pan, so that at least the segments of the baking pan are completely filled with the baking mass B1, and
- filling the at least one second baking mass B2 with a quantity into the at least one baking pan so that the at least one first baking mass B2 is completely covered.

9. Method according to claim 7 or 8, **characterized in that** the baked baked product is coated with at least one glaze and/or couverture.

## Revendications

1. Moule de cuisson pour la cuisson d'une masse à cuire, en particulier d'une pâte à gâteau, une masse de levure ou autres masses riches en protéines,
- avec au moins une surface inférieure et au moins une ouverture supérieure, dans lequel la surface inférieure et l'ouverture supérieure se font face et la distance entre la surface inférieure et l'ouverture supérieure correspond à la hauteur h_{B} du moule de cuisson ;
- avec au moins une paroi latérale ronde circulaire ou elliptique ou quatre parois latérales a, b, c, d qui s'étendent respectivement depuis la surface inférieure et l'ouverture supérieure et relient celles-ci entre elles ;
- avec au moins une élévation en forme de nervure continue s'étendant depuis la surface inférieure en direction de l'ouverture supérieure avec la hauteur h_{E} qui s'étend le long de la surface inférieure et sépare la surface inférieure en au moins deux segments,
dans lequel la hauteur h_{E} de l'au moins une élévation en forme de nervure est entre 1/3 à 4/5, de préférence 1/3 à 2/3 de la hauteur entière h_{B} du moule de cuisson,
**caractérisé en ce que**
l'au moins une élévation en forme de nervure est réalisée d'un seul tenant avec le moule de cuisson, et
l'au moins une élévation en forme de nervure est noircie pour l'augmentation de la transmission de chaleur et la surface inférieure et les parois latérales ne sont pas noircies de sorte que l'au moins une élévation en forme de nervure présente une transmission de chaleur accrue par rapport à la surface inférieure et/ou aux parois latérales du moule de cuisson.

2. Moule de cuisson selon l'une des revendications précédentes, **caractérisé par** une élévation en forme de nervure qui divise le moule de cuisson en deux segments.

3. Moule de cuisson selon l'une des revendications précédentes, **caractérisé par** deux élévations en forme de nervure s'étendant parallèlement l'une à l'autre qui divisent le moule de cuisson en trois segments.

4. Moule de cuisson selon l'une des revendications précédentes, **caractérisé par** deux élévations en forme de nervure qui sont agencées dans un angle droit l'une par rapport à l'autre de sorte que le moule de cuisson soit divisé en quatre segments.

5. Moule de cuisson selon l'une des revendications précédentes, **caractérisé par** trois élévations en forme de nervure s'étendant parallèlement les unes aux autres, dans lequel le moule de cuisson est divisé en quatre segments.

6. Moule de cuisson selon l'une des revendications précédentes, **caractérisé par** deux élévations en forme de nervure s'étendant parallèlement l'une à l'autre et une troisième élévation en forme de nervure agencée perpendiculairement à ces deux élévations, dans lequel le moule de cuisson est divisé en six segments.

7. Procédé de cuisson d'une masse à cuire dans au moins un moule de cuisson selon l'une des revendications précédentes, comprenant les étapes :
- la mise à disposition d'au moins une masse à cuire ;
- le remplissage de l'au moins une masse à cuire dans l'au moins un moule de cuisson et la fermeture en option de l'au moins un moule de cuisson, et
- la cuisson de l'au moins une masse à cuire dans l'au moins un moule de cuisson dans au moins un four de cuisson à des températures entre 100 °C et 300 °C, de préférence entre 140 °C et 280 °C, en particulier de préférence à 160 °C et 240 °C.

8. Procédé selon la revendication 7, **caractérisé par**
- la mise à disposition d'au moins deux masses à cuire avec une composition différente, dans lequel au moins une première masse à cuire B1 présente la densité ρB1 et au moins une seconde masse à cuire B2 présente la densité ρB2 et ρB1 est ≥ ρB2,
- le remplissage de l'au moins une première masse à cuire B1 avec une quantité dans l'au moins un moule de cuisson de sorte qu'au moins les segments du moule de cuisson soient remplis complètement avec la masse à cuire B1, et
- le remplissage d'au moins une seconde masse à cuire B2 avec une quantité dans l'au moins un moule de cuisson de sorte que l'au moins une première masse à cuire B2 soit complètement recouverte.

9. Procédé selon la revendication 7 ou 8, **caractérisé en ce que** la marchandise à cuire cuite est revêtue d'au moins un glaçage et/ou chocolat de couverture.
